# EUROPEAN PATENT APPLICATION

(11) **EP 0 889 637 A2**
(43) Date of publication of application: **07.01.1999**
(21) Application number: 98111982.9
(22) Date of filing: 29.06.1998
(51) Int. Cl.: H04N 1/387, H04N 1/23

(54) **Recording device provided with communication functions**

(30) Priority: 30.06.1997 JP 174166/97
(71) Applicant: Murata Kikai Kabushiki Kaisha, Minami-ku, Kyoto-shi, Kyoto (JP)
(72) Inventor: Kontani, Masaki, Minami-ku, Kyoto-shi (JP)
(74) Representative: Liedl, Christine, Dipl.-Chem.

(57) **Abstract**

A facsimile-copier machine (11) which is able to receive image data from a remote communication device, rotate image data 90 degrees if necessary and print the image onto a recording sheet (56). The facsimile-copier (11) has a plurality of paper cassettes (57) and selects the most size-effective recording sheet (56) from a plurality of sizes of paper. To this end, either the recording sheet optimal for recording of the image before rotation or the recording sheet optimal for recording of the image after rotation is selected based on whichever sheet has the smallest size. The image is then printed in a either rotated or non-rotated posture onto the selected recording sheet.

## Description

The present invention relates to a recording device provided with communication functions like facsimile communication capability.

A communication-capable recording device capable of recording onto a fixed size recording sheet (A4 size, for example), is known. In this kind of recording device, when image data received is larger than the fixed size recording sheet set in the recording device, the received image data is reduced before being output.

Other recording devices which can hold recording sheets of multiple sizes and print the image on an appropriate size of recording sheets are also known. However, when the recording sheets of a particular size are only available, this type of recording device also reduces the size of the received image before printing if the received image is greater than the size of the available recording sheets. When the recording sheets of all sizes are provided in the recording device, a recording sheet matching the width of the received image data is selected, and recording is carried out using recording sheets of this size. For example, as shown in FIG. 11 of the accompanying drawings, if an A4 image is received in a lateral position (referred to as "A4R"), the width of the image data corresponds to the width of an A3 size recording sheet, and therefore an A3 size recording sheet is selected for recording (printing). The recording is of course carried out without size reduction.

The above-described conventional communication-capable recording devices reduce the received image data for output onto a recording sheet if the prepared or available recording sheet is smaller than the received image data. The reduced image is generally difficult to read. Further, even if a sufficient size of recording sheet is available, the A4R image data (laterally positioned image data of A4 size) may be output onto the A3 size recording sheet, as shown in FIG. 11. This leaves large sections of white-space and wastes the recording paper.

In order to deal with these problems, still another type of recording devices that rotate the received image data 90 degrees and then selects a recording sheet of appropriate size from a plurality of recording sheet sizes have been proposed. This recording device has a table which match the size of the received image data and the size of the recording sheet on a 1:1 correspondence. Thus, based on this table, it is determined whether or not to rotate the image data 90 degrees before printing.

This type of image recording device, however, has a problems that the table data may grow very large since there are so many size (size reduction)-rotation combinations in order to allow a user to arbitrarily determine size reduction as well as rotation of the received image.

Other types of conventional recording devices are, for instance, disclosed in Japanese Patent Application, Publication Nos. 5-227412 and 7-245670.

In order to solve these problems existing in the conventional technology, it is an object of the present invention to propose a communication-capable recording device that has a small table storing less data (or even no table) but can still select an optimally sized recording sheet for received image data and reduce the amount of wasted white-space on the recording sheet when recording received image data, and which can therefore reduce the number of recording sheets consumed in total.

In order to accomplish this object, the present invention provides a communication-capable recording device equipped with a function to rotate image data 90 degrees for output onto a recording sheet and a function to selectively use recording sheets of a plurality of sizes, characterized in that a control means is provided for selecting a smaller recording sheet upon comparing a recording sheet suited for recording of image of before 90-degree rotation with a recording sheet suited for image of after 90-degree rotation. When the image data is recorded, a recording sheet optimally sized to that image data is selected, and therefore the amount of white space on the recording sheet is minimized. As a result, the number of recording sheets used can be reduced as a whole. Further, the size selection of the recording sheet is not made by using a table, but instead determined logically, and therefore the recording device does not need a large table (or it does not need any table).

When a plurality of image data is received, they may be rotated 90 degrees before printing if these rotated image data are printable on a single recording sheet. If a plurality of image data can be combined and printed on a single recording sheet, the number of recording sheets consumed for printing is reduced in total.

If the image data must be divided in order to output it onto a plurality of smaller sized recording sheets but the image data can be made to fit onto a larger size recording sheet by rotating it 90 degrees, the larger size recording sheet may be selected and the image may be rotated 90 degrees. When a recording sheet optimally sized to the image data is not available, a larger size recording sheet is used for printing, and wasted space on the recording sheet is cut out.
- FIG.1: is a cross-section diagram showing an embodiment of the present invention in the form of a facsimile-copier machine.
- FIG.2: shows an enlarged cross-section view of major parts of the facsimile-copier machine shown FIG. 1.
- FIG.3: illustrates a block diagram of a circuit structure of the facsimile-copier machine shown in FIG. 1.
- FIG.4: is a flow chart showing the operation for rotating the received image data.
- FIG.5: is a flow chart showing the operation for printing the received data.
- FIG.6: is a diagram illustrating the processing of image data when A4R size image data is received.
- FIG.7: is a diagram illustrating the processing of image data when B5R size image data is received.
- FIG.8: is a diagram illustrating the processing of image data when image data slightly longer than B5R is received.
- FIG.9: is a diagram illustrating the processing of image data when A4 size image data is received.
- FIG.10: illustrates different sizes of standard size paper prepared in a paper supply unit of the facsimile-copier machine shown in FIG. 1.
- FIG.11: is a diagram illustrating the processing of image data when A4R size image data is received in a conventional device.

An embodiment (facsimile-copier machine) in which teaching of the present invention is incorporated will now be described in reference to the accompanying drawings.

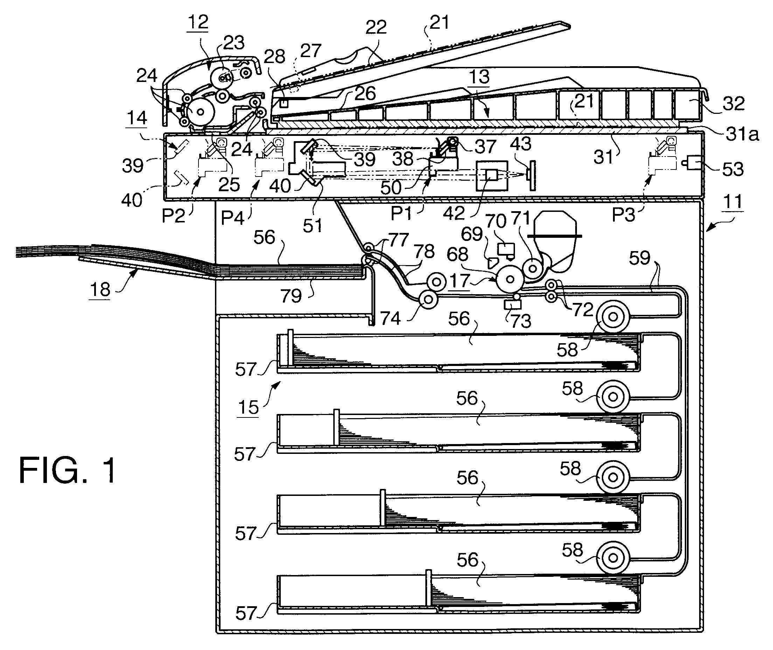

Referring to FIG. 1, illustrated is a facsimile-copier machine 11 of the embodiment includes a document feeder portion 12, a flat-bed scanning portion 13, a document scanning portion 14, a paper supply portion 15, a recording portion 17, and a paper discharge portion 18.

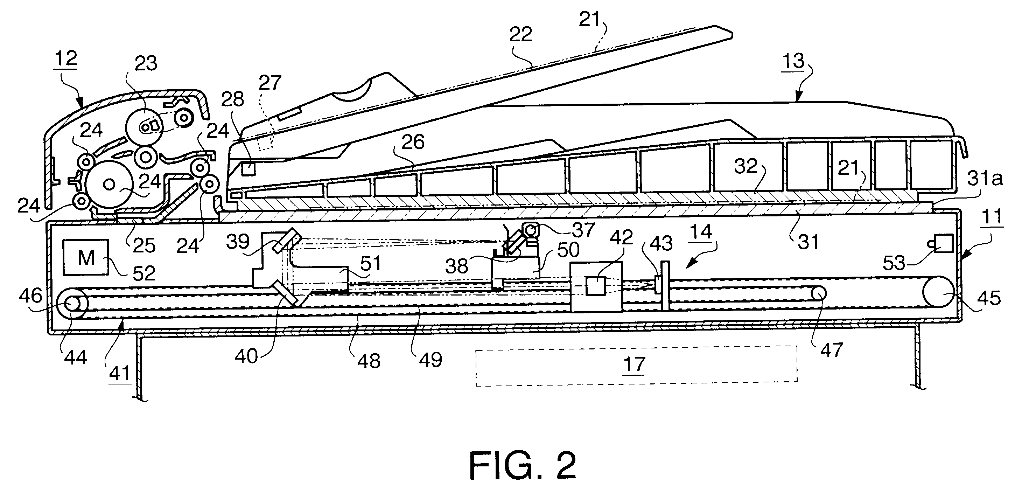

As shown in FIG. 2, the document feeder portion 12 includes a document tray 22 in which a document 21 can be placed, a separation roller 23 which separates the pages of document 21 and feeds the document 21 one page at a time, a plurality of feed rollers 24 which feeds the separated document 21 along a predetermined passageway, a transparent plate (scanning plate) 25 over which the document 21 passes and through which a light of beam is projected, and a document output tray 26 into which the output document 21 is stacked.

A document sensor 27 is arranged in the document tray 22, and outputs a detection signal when a document 21 is placed in the document tray 22. A discharged document sensor 28 is arranged above the document output tray 26, and outputs a detection signal when there is a document 21 on the document output tray 26.

The flat-bed portion 13 is provided with a transparent document scanning table 31 upon which a document 21 can be placed, and a document restraining cover 32 which is arranged such that it can pivotably be opened and closed over the document scanning table 31. The document tray 22 and document output tray 26 of the document feeder portion 12 are arranged on top of the cover 32 of the flat bed portion 13, and are moved with the cover 32.

The document scanning portion 14 is equipped with a light source 37 which emits light to a document 21 passing over the scanning plate 25 or a document 21 placed on the document scanning table 31, first, second and third mirrors 38, 39, 40 which change the light path of the light reflected from the document 21, and a transport mechanism 41 which moves the light source 37 and the first to third mirrors 38 to 40. The document scanning portion 14 is also equipped with a light condensing lens 42 which gathers the light reflected from the third mirror 40, and a scanning element (imaging element) (CCD) 43 which scans in a document 21 based on the light passing through the light condensing lens 42.

The transport mechanism 41 is comprised of a pair of large lateral pulleys 44, 45, and a pair of small lateral pulleys 46, 47. A first belt 48 is stretched across the large lateral pulleys 44, 45, and a second belt 49 is stretched across the small lateral pulleys 46, 47. Further, the transport mechanism 41 is provided with a first carriage 50 attached to the first belt 48, a second carriage 51 attached to the second belt 49, and a step motor 52 for driving the pulleys 44, 46.

The larger pulleys 44, 45 have a radius twice as large as the smaller pulleys 46, 47. Further, the left large pulley 44 and left small pulley 46 are coaxially connected such that they are rotated together by the step motor 52. The light source 37 and first mirror 38 are supported on the first carriage 50, and the second mirror 39 and third mirror 40 are supported on the second carriage 51.

Thus, when the step motor 52 causes the large pulleys 44, 45 and the small pulleys 46, 47 to rotate, the first and second carriages 50, 51 are caused to move by the movement of the first and second belts 48, 49, respectively. The first carriage 50 is moved at twice the speed of the second carriage 51. As shown in FIG. 1, the carriages 50, 51 are selectively moved to an intermediary standby position P1, a first scanning position P2 below the first scanning plate 25, a second scanning start position P3 below the base end (right end) 31a of the document scanning table 31 and a second scanning end position P4 below the left end of the document scanning table 31.

The document feeder portion 12 and document scanning portion 14 constitute an automatic document feeder (ADF). When the carriages 50 and 51 are positioned at the first document scanning position P2, the documents supplied from the document feeder 12 and passing over the first scanning plate 25 are scanned. The carriages do not move during scanning. The flat bed portion 13 and document scanning portion 14 constitute a flat bed scanner (FBS). From the second document scanning start position P3, the carriages 50 and 51 are moved towards the second scanning termination position P4 to scan the document 21 set atop the document scanning table 31. The document 21 does not move during scanning.

As illustrated in FIG. 2, a carriage sensor 53 is arranged underneath the base end 31a of the document scanning table 31. When the carriages 50 and 51 are moved to the second scanning start position P3, the carriage sensor 53 outputs a detection signal.

Referring back to FIG. 1, the paper supply portion 15 includes a plurality of paper supply cassettes 57 for storing stacks of standard sized paper 56 of various sizes (there are four sizes in the present embodiment), feed rollers 58 which feed out the recording paper 56 from the paper cassettes 57 towards the recording portion 17 one sheet at a time, and a guide bracket 59 which guides the supply of paper 56. In the illustrated embodiment, different sizes of recording paper 56 are stored in the paper cassettes 57 respectively.

The recording portion 17 is comprised of a photosensitive drum 68, an electric charger 69 which applies a uniform charge to the surface of photosensitive drum 68, an exposing unit 70 which forms an electrostatic latent image on the surface of the photosensititive drum 68, and a developer 71 which supplies toner to the electrostatic latent image on the photo-conductive drum 68 and develops (visualizes) the image. The recording portion 17 is further provided with a pair of feed rollers 72 which feeds the paper 56 to the photosensitive drum 68, a transfer unit 73 which transfers the toner image from the surface of the photosensitive drum 68 to the paper 56, and a fuser 74 which heats and fixes the toner image onto the surface of the paper.

The paper discharge portion 18 is provided with a plurality of discharge rollers 77 which discharges the paper 56 upon completion of recording, a guide bracket 78 which guides the discharged paper 56 from the fuser 74 to the discharge rollers 77, and an outlet tray 79 which receives the discharged paper 56 in a stacked condition.

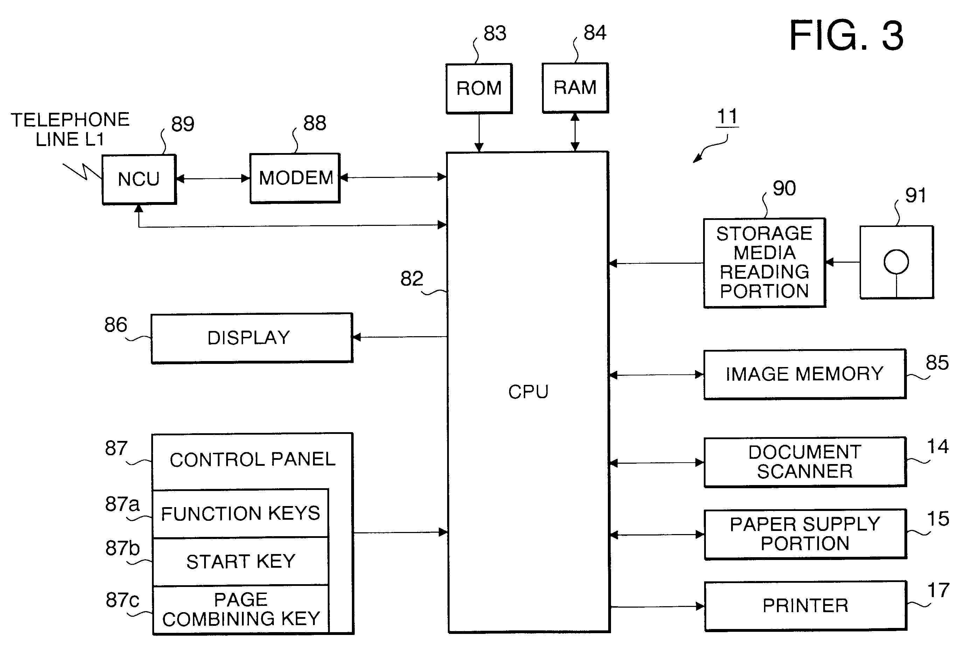

The circuit structure of the facsimile-copier machine 11 will now be described in reference to FIG. 3. CPU 82 controls the operation of the various elements of the facsimile-copier machine 11. ROM (Read Only Memory) 83 stores various control programs required to operate the machine 11. RAM (Random Access Memory) 84 temporarily stores data created during execution of the control programs. CPU 82, ROM 83 and RAM 84 thus constitute a control means of the facsimile-copier machine.

A storage media reading portion 90 reads data from a storage medium (i.e., computer usable medium) 91 which might include floppy disks or CD-ROMs, and outputs the data to the CPU 82. The data contained in the storage medium 91 may include various control programs required to operate the facsimile-copier 11 and image data recorded by a recording device not shown in the drawing.

The document scanning unit 14 scans image data presented on document 21 via the scanning plate 25 or the flat bed 31, and outputs it to the CPU 82 as binary black-and-white image data. An image memory 85 temporarily stores image data received from a remote communication terminal device, image data from documents read-in by the document scanning portion 14, or read-in by the storage media reading portion 90. The recording portion 17 outputs this image data onto the recording paper 56.

The display portion 86 is provided with an LCD panel or LED indicators which display information about the operating condition of the facsimile-copier machine 11 (for example, copy mode, transmission mode, printing mode, stand-by, mechanical failure, etc.). A control panel 87 includes various controls including function selection keys 87a, a start key 87b, and a page combining key 87c, used to perform the various operations of the machine 11.

The mode selection keys 87a are used to set the facsimile-copier machine 11 to a copy mode or a facsimile transmission mode. The start button 87b is used to begin a copy operation or start a facsimile transmission operation. The page combining key 86c is used, for example, to combine 2 pages of data received during facsimile reception such that it will fit on a single recording sheet.

A modem 88 modulates and demodulates transmitted data. NCU (Network Controller Unit) 89 controls the connecting to and disconnecting from telephone line L1, sends a dial pulse or tone signals used to dial a remote facsimile number, and detects the pulse or tone signals sent by a remote facsimile machine.

CPU 82 temporarily stores in the image memory 85, as necessary, received image data that has been rotated 90 degrees. Further, CPU 82 selects an appropriately sized recording sheet from the paper feed unit 15 onto which to record image data when image data received from a remote communication device or read-in from one of the image reading portions is to be recorded onto the paper 56. If an optimally sized recording sheet 56 is not available in a particular paper cassette 57 which is designed to store that size of paper, the CPU 82 selects the next best size of paper from another cassette 57.

Particularly when recording the image data received from a remote communication device, the CPU 82 compares the paper size that would be used for the received image data if the image is not rotated with the paper size that would be used for the received image data if the image was rotated 90 degrees. It then selects the smaller paper size.

In the meantime, one of the paper cassettes 57 may contain small sized paper 57 onto which segmented image data can be recorded, and another paper cassette 57 may store large sized paper 56 onto which 90-degree turned image data can be recorded without being segmented. In this case, the CPU 82 selects the latter cassette 57 holding the larger sized sheet 56, and prints out the image data which has been rotated 90 degrees.

If the page combining key 87c has been pressed, the CPU 82 rotates two pages of image data 90 degrees and determines if there is a recording sheet 56 onto which the entire document length can be output. If such a recording sheet is available, i.e., if the combined image data can fit onto a single recording sheet, then the two 90-degree turned images are printed on the recording sheet 56.

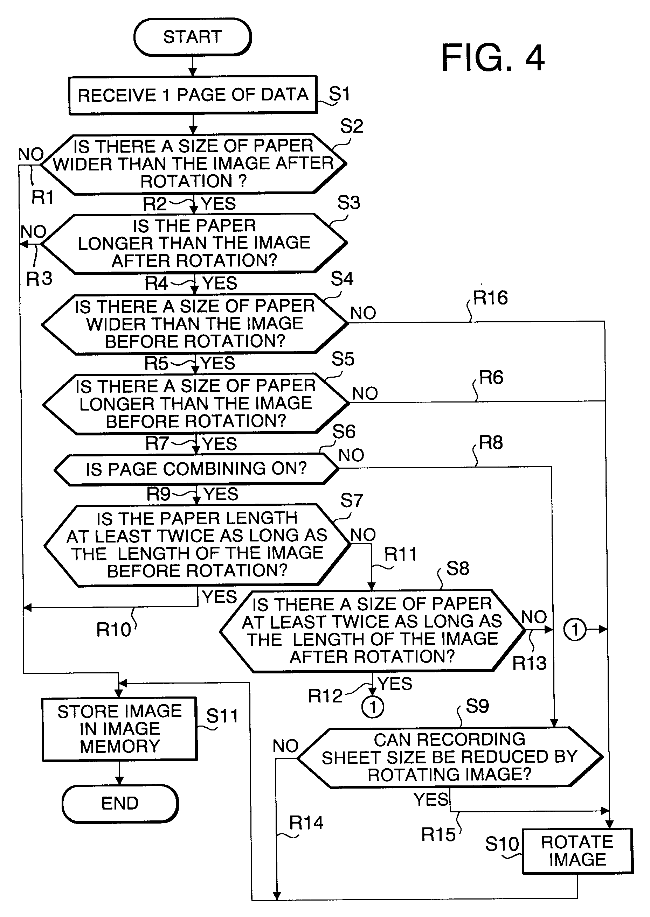

Next, the operation of the facsimile-copier machine 13 when it receives image data from a remote facsimile machine and prints it on a recording sheet 56 will be described based upon the flow chart shown in FIG. 4. The operation proceeds under control of CPU 82 using the programs stored in ROM 83.

In step S1, when one page of image data is received from a remote facsimile machine via facsimile transmission, the evaluations of steps S2 through S9 are performed and the program proceeds through routes R1-R16 to either step S10 or S11. In this way it is determined whether or not to rotate the received image data 90 degrees or keep the data as it is before storing it in the image memory 85.

Namely, in step S2 it is determined whether or not at least one of the cassettes 57 of the facsimile-copier 11 contains a size of paper 56 which is wider than the width of the received image of after-90-degree rotation. In other words, it is determined whether or not there is a recording sheet 56 whose width is large enough to hold the length of the received image. (The length of the received image is a length in the sub-scanning direction.) If it is determined that no such paper is available in any cassettes 57 of the machine 11, the program moves through R1 to Step S11, and the received image data is stored directly in the image memory 85 without being rotated. On the other hand, if a sheet 56 that is wide enough to hold the length of the received image is found (length of the received image becomes a "width" when turned 90 degrees), the program moves through R2 to step S3.

At step S3 it is determined whether or not the paper size determined at step S1 is longer than the length of the received image when the received image data is rotated. In other words, it is determined whether or not there is a sheet 56 among the sheets, which fit the criterion of step S2, whose length is large enough to hold the length of the received image after rotation. (This length is a length measured in the main scanning direction.) If it is determined that no such paper is stored in the machine 11, the program moves through R3 to step S11, and the received image data is stored directly in the image memory 85 without being rotated. On the other hand, if a sheet 56 which is long enough to hold the width of the received image as measured in the main scanning direction is found, the program moves through R4 to Step S4.

At step S4 it is determined whether or not the facsimile-copier 11 contains a size of paper 56 which is wider than the received image when the received image data is not rotated. In other words, it is determined whether or not there is a sheet 56 among the sheets, which fit the criterion of S3, which is wider than the width of the received image in the main scanning direction. If it is determined that no such paper is stored in the machine, the program moves through R16 to step S10 and the received image data is rotated. On the other hand, if a sheet 56 having a width greater than the width of the received image (measured in the main scanning direction) is found, the program moves through R5 to step S5. In this case, if a plurality of cassettes 57 meets the requirement of step S4, the one which stores a sheet with a width closest to the width of the scanned image is selected.

At step S5 it is determined whether or not the length of the paper 56 is longer than the length of the received image when the received image data is not rotated. In other words, it is determined whether or not there is a sheet 56 among the sheets which fit the criterion of S4 which is long enough to hold the length of the received image. (This length is a length measured in the subscanning direction.) If it is determined that no such paper exists, the program proceeds through R6 to S10, and the received image data is rotated. If such a sheet 56 is available, the program proceeds through R7 to step S6.

At step S6, it is determined whether or not to combine two pages of received image data onto a single recording sheet 56 based upon whether or not a page combine mode has been set by the user. The user can select the page combine mode by operating the page combine mode key 87c on the operation panel 87. If the page combine mode is OFF, the program proceeds through R8 to step S9, but if the page combine mode is ON, the program proceeds through R9 to step S7.

At step S7 it is determined whether or not the length of the received image is within 1/2 the length of the recording sheet 56 contained in the facsimile-copier 11 if the received image is not rotated. In other words, it is determined whether or not there is a sheet 56 among the sheets which fit the criterion of S6 which is at least twice the length of the received image. (This length is a length measured in the subscanning direction.) To rephrase, it is determined whether or not it is possible to combine two pages of received data onto a single recording sheet without rotating the received image data. If there is a recording sheet that will hold two pages of received image data without rotating the data, the program proceeds through R10 to step S11, and the image data is stored directly in the image memory 85 without rotating it. If, on the other hand, no such recording sheet 56 is provided in the facsimile-copier 11, the program proceeds through R11 to step S8.

At step S8 it is determined whether or not the length of the received image is within 1/2 the length of a recording sheet 56 contained in the facsimile-copier 11 if the received image is rotated. In other words, it is determined whether or not there is a sheet 56 which is at least twice the length (the width measured in the main scanning direction) of the received image. To rephrase, it is determined whether or not it is possible to combine two pages of received data onto a single recording sheet by rotating the received image data. If there is a recording sheet that will hold two pages of received image data, the program proceeds through R12 to step S10 and rotates the received image data. If, on the other hand, no such recording sheet 56 is provided in the facsimile-copier 11, the program proceeds through R13 to step S9.

At step S9 it is determined whether or not the area of the recording sheet onto which the rotated image data is recorded (i.e., recording paper size) can be reduced by rotating the image. In other words, it is determined whether or not the size of the recording sheet 56 onto which the image would be recorded after rotation is smaller than the size of the recording sheet 56 onto which the image would be recorded before rotation. If the recording sheet size needed for the image of before rotation would be smaller than that of after rotation (No at step S9), the program proceeds through R14 to step S11 and the received image data is stored in the image memory 85 without being rotated. If, on the other hand, the recorded area would be smaller after rotation, the program proceeds through R15 to step S10 and the received image data is rotated.

At step S10 the received image data is rotated, and the program proceeds to S11 where the image data is then stored in the image memory 85.

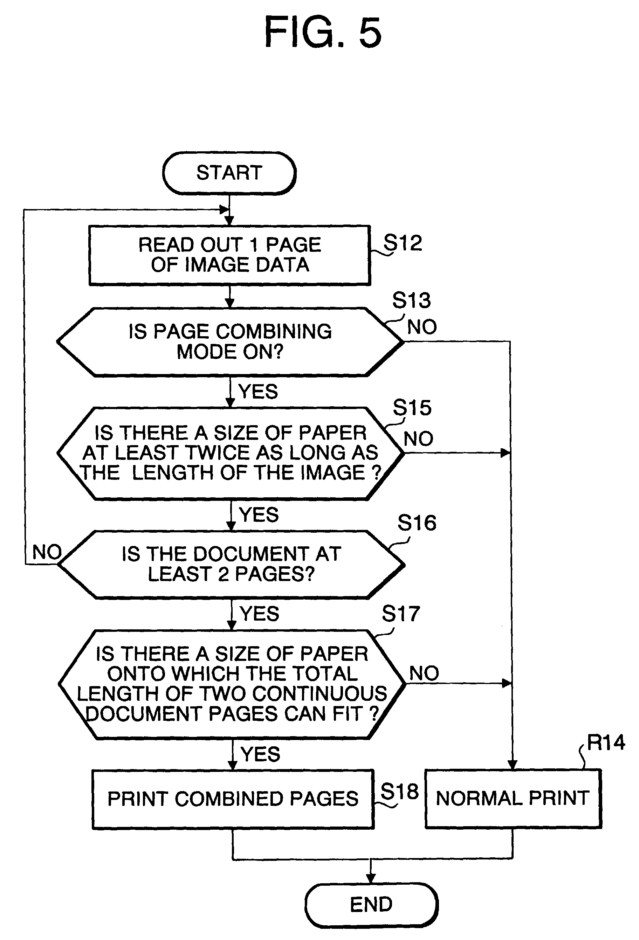

Subsequent to being stored in the image memory 85, whether rotated or not, the image data is printed out according to the processing steps shown in the flow chart shown in FIG. 5.

Thus, when one page of image data is read out from image memory 85 at step S12, the program moves to step S13. At step S13 it is determined whether or not a page combining mode has been selected by the user who operates the page combining selection key 87c on the control panel 87. If the page combining mode is OFF, the normal print mode is ON so that the program moves to step S14, and each page of the image is recorded onto one sheet of recording paper 56. On the other hand, if the page combining mode is ON, the program moves to step S15.

At step S15 it is determined whether the paper cassettes 56 contain any paper which is twice the length of the image read out from the image memory 85. If the length of the image exceeds the 1/2 of the length of all the sizes of the recording sheets 56 available in the facsimile-copier 11, then the program moves to step S14 and the normal print operation is carried out, i.e., each page of the image is recorded onto one sheet of recording paper, and the processing ends. On the other hand, if it is determined that the image length is within 1/2 the length of at least one of paper sizes of the recording sheets 56 prepared in the facsimile-copier 11, the program proceeds to step S16.

At step S16 it is determined whether the document read out from the image memory 85 exceeds 2 pages. If it is fewer than two pages, or in other words, the document is only one page, then the program returns to step S12, and the program waits for the next page of the document to be read out. If at least two pages of the document has been read out, however, the program proceeds to step S17.

At step S17 it is determined if the total length of two continuous pages of the document read out from memory can fit onto a single recording paper 56 contained in one of the paper supply cassettes 57. In other words, it is determined if the two continuous pages can be combined onto a single page (or if page combing is possible or not). If it is not possible to combine the two pages onto a single page of any available size, the program moves to step S14, and each page of the image read out from the memory is individually recorded onto one recording sheet 56 regardless of the page combining mode being set or not. If, on the other hand, it is determined that it is possible to combine the two pages onto at least one of the recording sheets 56 in the facsimile-copier 11, then the program proceeds to step S18, and the combined page printing is carried out. Thus, two pages worth of the document read out of the image memory are combined and printed on a single recording page, and the processing is completed.

Next, how the facsimile-copier 21 of the present embodiment determines whether or not to rotate the image data received from a remote facsimile machine, and onto what sized paper to output the received image data, for each size of image data received, is described based on FIG. 4 and FIGs. 6 through 10.

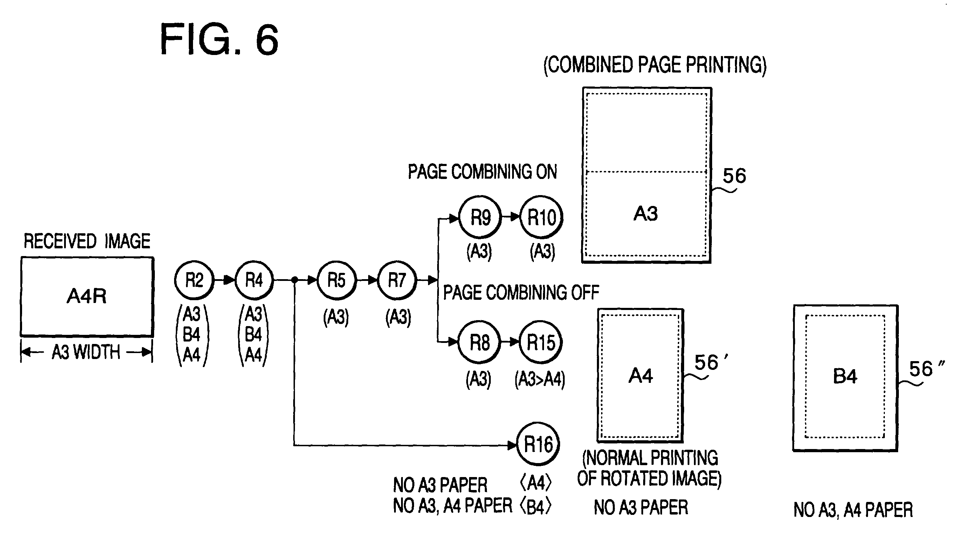

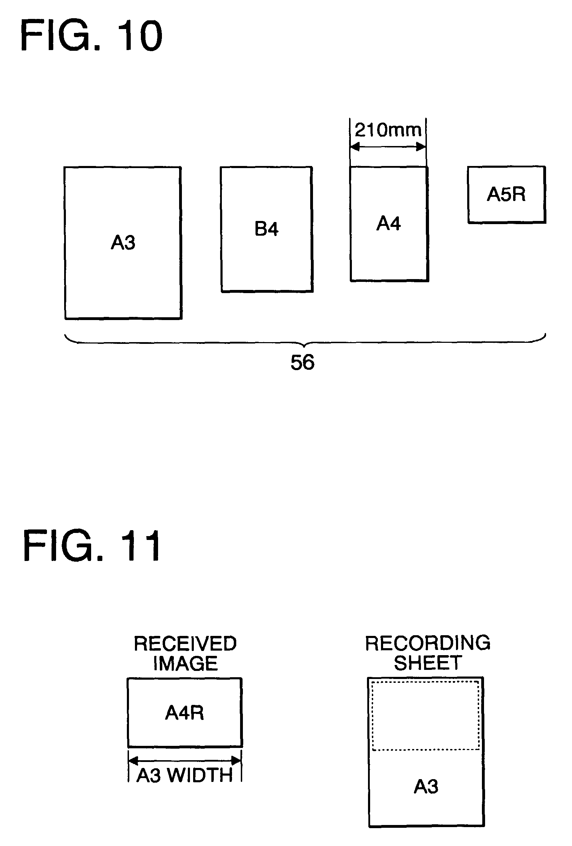

In the following description, it should be assumed that as illustrated in FIG. 10 the paper supply portion 15 has the four cassettes 57 to hold four different sizes of recording paper 56 respectively, namely: A3, B4, A4, and A5R. It should also be noted in FIG. 6 through FIG. 9 that the number next to the "R" inside the circle corresponds to the route number between the steps indicated in the flow chart of FIG. 4, and the number inside parentheses below the circle indicates the sizes of recording paper 56 which have been determined to be appropriate for printing according to each step of the program.

### Example 1

Referring first to FIG. 6, when one page of A4R (landscape) sized image data is received, it is determined in Step S2 whether or not the facsimile-copier 11 contains paper of a size capable of holding the width of the rotated image, or in other words, A4 size width or larger paper. In this case, since A3, B4, and A4 size paper are all wide enough to hold the rotated image, the program passes through R2 to step S3 to determine if the length of the rotated image will fit onto these sizes of paper. Since these three paper sizes (A3, B4, A4) are also all wide enough to hold the rotated image, the program passes through R4 to step S4 to see if there are any sizes of paper 56 which are wide enough to hold the image before rotation. Since the image can fit onto A3 size paper without being rotated, the program passes through R5 to step S5. Here it is determined if the length of the image will fit onto this paper size (A3 size). Since the image length can also fit onto the A3 paper, the program continues through R7 to step S6 where it is determined if the page combining mode is ON or OFF.

If the page combining mode has been selected by the user, the program passes through R9 to step S7, where it is confirmed that the image length can fit within 1/2 the length of the A3 paper without being rotated. Then, the program passes through R10 to step S11 to store A4R size received image data in the image memory 85 without being rotated. Following this, the image is combined in its unrotated state and printed onto the A3 size paper 56 as illustrated in the flow chart of FIG. 5.

If, on the other hand, the page combining mode is OFF, the program passes through R8 to step S9 from step S6, where it is determined if the recording paper size 56 can be reduced by rotating the image. Since it is possible to print the A4R image onto an A4 sized recording sheet after rotation, and since the A4 size sheet is smaller than the A3 size sheet, the A4 size recording sheet is selected as the most suitable paper size onto which to print the image. Thus, passing through R15, the A4R sized image data is rotated and stored in the image memory 85, and the rotated image is printed onto the A4 sized paper 56' as shown in the flow chart of FIG.5.

If at step S4 it is determined that the facsimile-copier 11 does not have any A3 paper (for example, if the machine 11 has run out of A3 paper), A4 is selected as the recording paper, as indicated by the brackets 〈 〉. Thus the program passes through R16 and stores the rotated image in the image memory 85, and outputs the rotated image onto A4 size paper 56' according to the flow chart of FIG.5.

Further, if it is determined that the facsimile-copier 11 does not have either A3 or A4 size paper, B4 is selected as the paper size onto which to print the image as indicated by the brackets 〈 〉. Then, the rotated image is output onto B4 size paper 56".

### Example 2

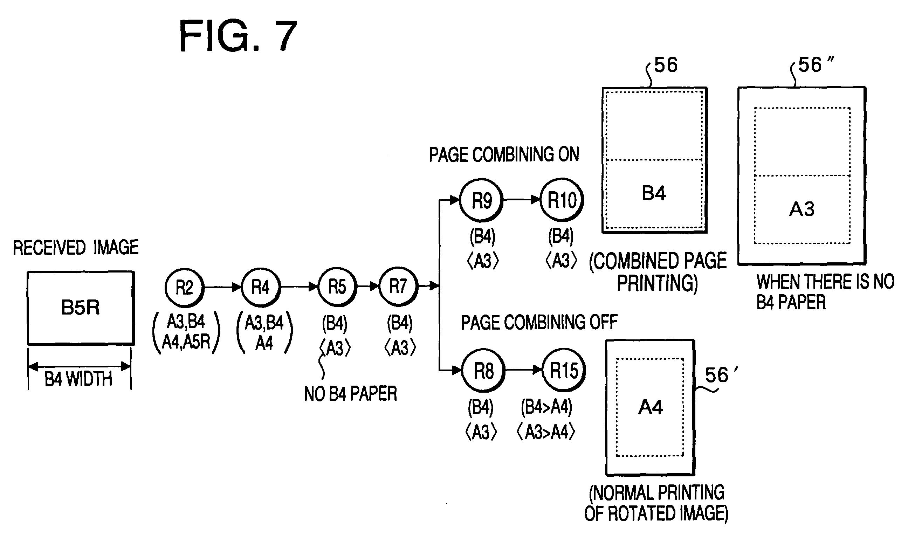

In this Example, shown in FIG. 7, B5R sized image data is received from a remote device. In step S2, when 1 page worth of B5R (landscape) image data is received, it is determined whether or not the facsimile-copier 11 contains paper of a size capable of holding the width of the rotated image, or in other words, B5 size or larger paper. In this case, since all the paper sizes available to the facsimile-copier 11 are wide enough to hold the rotated image, the program passes through R2 to step S3 to determine if the length of the rotated image will fit onto these sizes of paper. Since A3, B4, and A4 size paper are long enough to hold the rotated image, the program then passes through R4 to step S4 to see if there are any sizes of paper which are wide enough to hold the image before rotation. The width of the image can fit onto A3 and B4 size paper without being rotated. If there are multiple paper sizes onto which the image can fit, step S4 gives priority to the smallest available paper size. For this reason, B4 size paper is selected as the appropriate paper size, and the program proceeds from here as described in the first Example.

If the page combining mode is ON, the received B5R sized image data is printed out onto a B4 sheet of paper 56 two pages at a time without being rotated. On the other hand, if page combining mode is OFF, the same image data is rotated, and the rotated image is printed out onto an A4 size sheet of paper 56'.

If, however, it is determined that the facsimile-copier 11 does not have any B4 paper, A3 is selected as the paper size for printing as indicated by the brackets 〈〉 after R5. From here, the same processing occurs as when B4 is selected as the output size; if the page combining mode is ON, two pages of image data are printed out onto a single A3 sheet 56" at a time without being rotated. On the other hand, if the page combining mode is off, the image data is rotated and printed out on A4 size paper 56' according to similar procedures to the case where there is B4 paper.

### Example 3

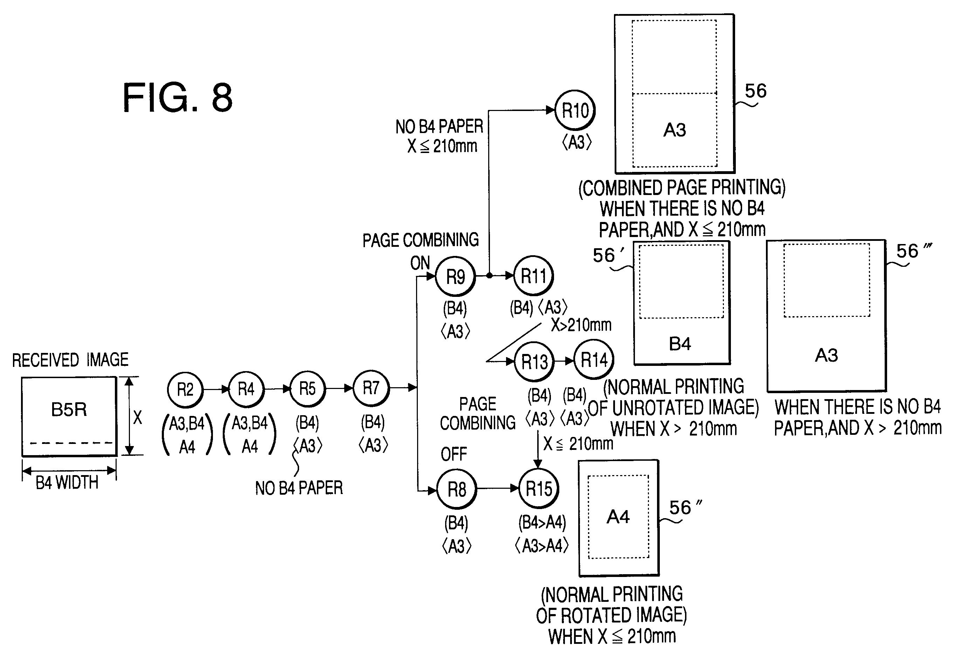

In this Example, image data whose length "x" is slightly longer than the length of a B5R sized sheet of paper is received as illustrated in FIG. 8. In route R2, when 1 page worth of such image data is received, it is determined that A3, B4 and A4 sized paper are large enough to hold the rotated image. The processing of the image continues in same was as in Example 2 until R7 (before the status of the page combining mode is determined). In other words, B4 sized paper is selected as the size of recording paper, and it is then determined whether or not the page combining mode has been set.

If the page combining mode is ON, the program passes through R9 to step S7, and it is determined that the length of the received image will exceed 1/2 the length of the B4 paper size. The program then passes through R11 to step S8 where it is determined that the length of the received image after rotation would exceed 1/2 the length of a B4 sheet. The program then passes through R13 to step S9. Here, if the width of the rotated image exceeds the B5 width but is within A4 paper width (210mm), it is determined that the image should be rotated and, instead of B4 size paper, A4 size paper should be selected as recording paper. From here, the program passes through R15, and the rotated image data is stored in the image memory 85. The rotated image is then output onto A4 size paper 56" according to the flow chart shown in FIG.5.

However, if the width of the rotated image surpasses not only the width of B5 sized paper, but also that of A4 size paper (210mm), it is determined that the image will not fit onto an A4 size sheet of paper even after being rotated. For this reason the received image data in this Example will, after the program passes through R14, be stored in the image memory 85 without being rotated. Then, as shown in the flow chart of FIG. 5, the image will be printed in an unrotated state onto a B4 size sheet of paper 56'.

On the other hand, if the page combining mode is OFF, the image is processed as in Example 2, with the image being rotated and printed onto an A4 size sheet of paper 56". If there is no B4 size paper in the facsimile-copier 11 (for example, if the machine 11 has run out of B4 size paper), A3 is selected as the recording paper size as shown in the brackets 〈 〉 after R5. If the page combining mode is ON and the length of the unrotated image is within 210mm, the program passes through R9 to step S7 to determine that the length of the image is within 1/2 the length of the A3 sheet. Thus, passing through R10, the received image data is stored in the image memory 85 without being rotated, and the two unrotated images are printed onto a single A3 size paper 56 at a time according to the flow chart shown in FIG. 5.

In contrast to this, if the length of the unrotated image exceeds 210mm, it is determined at step S7 that the length of the image is not within 1/2 the length of the A3 sheet. Thus, as when B4 was selected as the recording paper size, A3 is selected as the recording paper size, and the unrotated image is printed on A3 size paper 56'''.

If the page combining mode is OFF, the same thing happens as when B4 is determined as the recording paper.

### Example 4

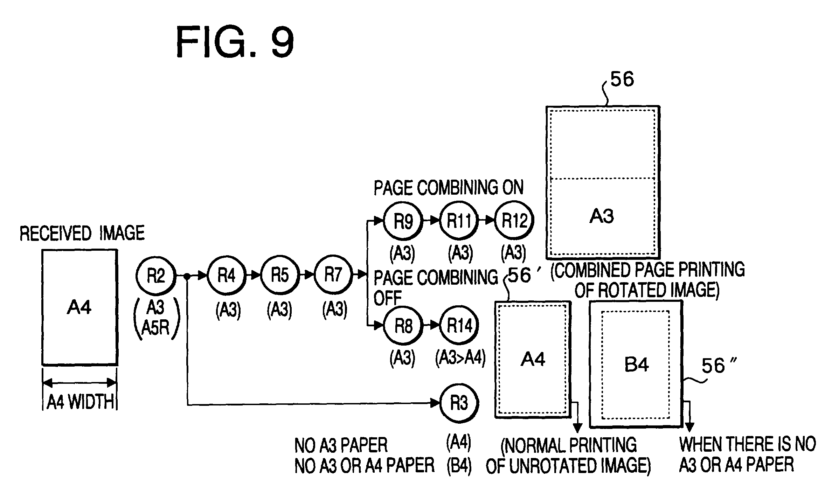

The fourth Example as shown in FIG. 9 deals with the case where one page worth of A4 size image data is received. In R2 it is determined that the image can fit onto A3 or A5R paper. At step S3 subsequent to route R2, A5R size is removed from the list of possible recording paper since the image has to be divided before rotating the image. In other words, rather than selecting a recording paper (A5R) smaller than the image that would require the image to be segmented, a larger size sheet on which the rotated image can be printed without being segmented is selected. Next, at step S4 through R4, an A3 page size capable of holding the received image after rotation is selected. The processing of the image is then the same as in the first Example until R7 (before the page combining mode status is determined). In other words, A3 size is only concerned when ON or OFF of the page combining mode is determined.

If the page combining is ON, the program passes through R9 to step S7, and it is determined that the length of the image is longer than 1/2 the size of the length of an A3 size sheet of paper. The program then moves through R11 to step S8, where it is determined that after rotation the length of the image would be within 1/2 the size of the length of an A3 sheet. Thus the program proceeds through R12, and the A4 sized image data that has been received is rotated, and this rotated image data is stored in the image memory 85. Two rotated image data are then printed out onto a single A3 size sheet of paper 56 at a time according to the flow chart of FIG. 5.

On the other hand, if the page combining is OFF, the program passes through R8 to step S9. Here, if the A4 sized image is rotated, it is determined that the A3 width paper is necessary, and it is determined that the size of the recording sheet cannot be reduced by rotating the image. At R14, the unrotated A4 sized image data is then stored in the image memory 85, and as shown in the flow chart of FIG. 5, printed out in an unrotated state onto an A4 size sheet of paper 56'.

If, however, at S3 it is determined that the machine is out of A3 size paper, the program passes through R3, and the unrotated image data is stored in the image memory 85. As shown in the flow chart of FIG. 5, the A4 sized image data is then printed out normally in an unrotated state onto an A4 sized sheet of paper 56'.

Further, the machine is out of both A3 and A4 sized paper, the same processing takes place, and the unrotated image is printed out onto a B4 size sheet of paper 56".

The expected results achieved in the above-described embodiment of the present invention are now described.

In the present embodiment of a communication-capable recording device, provided are a means to rotate the received data 90 degrees and output it onto a standard size sheet of paper 56, and a means to select a recording sheet from a plurality of sizes of standard size paper. When the received image data is recorded, one of either a recording sheet appropriately sized for recording the received image data before rotation or a recording sheet appropriately sized for recording the received image data after rotation is selected based on which recording sheet has the smallest area (size), and the received image data is then either rotated or unrotated and recorded onto the most size-effective recording sheet.

Hence, when received image data is recorded, a recording sheet 56 optimally sized to the received image data can be selected, and the amount of white space (wasted area) on the recording sheet is minimized and the number of recording sheets used to output the received image data can be reduced as a whole. Further, the selection of the recording sheet is not based upon a table, but based upon logical determination, and therefore there is no problem of gargantuan tables taking up space in memory, and the amount of data stored in ROM 83 can be minimized.

When the two image data are received, they are rotated 90 degrees and combined to fit on a single recording sheet if possible or appropriate. This also reduces the number of recording sheets consumed in total.

When the machine 11 does not have the best suited recording sheet but has a smaller one and a larger one, the machine selects the larger one. Outputting the image on the smaller size of paper would require the received image data to be segmented, and two recording sheets are used to reproduce the single image. It is troublesome for the user to combine these recording sheets.

The above-described embodiment of the present invention may be modified as follows.

Teaching of the present invention (how to rotate and combine the image) can be applied to the facsimile-copier 11 when the image data read from the document 21 by the document scanning unit 14 is output onto the record sheet 56 by the printer 17.

The present invention is also applicable when the image received from a remote communications device or scanned in by the scanner is output onto the record sheet 56 by the printer 17 under the direction of a computer software program read in from the storage media 91 by the storage media reading portion 90.

Other modifications and changes may also be made to the described and illustrated embodiment(s) within the spirit and scope of the present invention which are solely defined by the appended claims.

## Claims

1. A recording device (11) with capability of receiving image data and capability of rotating image data 90 degrees, comprising means (17) for printing the image data onto a recording sheet (56) characterized in that control means (82) is provided for selecting a recording sheet, onto which the image data is printed, from either a recording sheet suitable for recording the image data after rotation, or a recording sheet suitable for recording the image data before rotation, said selection based on which recording sheet has the smallest area.

2. An apparatus (11) for selecting a best size of recording sheet from a plurality of sizes of recording sheets in order to print an image on a recording sheet, comprising:
first determination means for determining whether a recording sheet larger than the image is available or not if the image is rotated 90 degrees;
first selection means for selecting a recording sheet larger than the image not rotated 90 degrees if determination made by the first determination means is negative;
second selection means for selecting the smallest recording sheet if there are two or more recording sheets are selected by the first selection means;
second determination means for determining whether a recording sheet larger than the image not rotated 90 degrees is available or not among those meeting the criteria of the first determination means;
third selection means for selecting a recording sheet meeting the criteria of the first determination means if determination made by the second determination means is negative, in order to print the image after rotating 90 degrees;
fourth selection means for selecting the smallest recording sheet if there are two or more recording sheets are selected by the third selection means;
fifth selection means for comparing a recording sheet meeting the criteria of the second determination means with that meeting the criteria of the first determination means and selecting the smaller one; and
sixth selection means for selecting the smallest recording sheet if there are two or more recording sheets are selected by the fifth selection means.

3. The recording device (11) of claim 1, characterized in that the control means (82) rotates at least two image data 90 degrees when a total length of these image data combined after 90-degree rotation is within a single recording sheet.

4. The recording device of claim 1 or 3, characterized in that the control means selects a larger recording sheet and rotates the image data 90 degrees when printing to a smaller recording sheet would require the image data to be segmented, and printing onto a larger recording sheet would enable the image data to be printed without segmentation if the image data were to be rotated 90 degrees.

5. The recording device of any one of foregoing claims, characterized in that the image data is image data received from a remote communication device.

6. The recording device of any one of claims 1 to 4, characterized in that the image data is image data provided from a scanner (14).

7. The recording device of any one of claims 1 to 5, characterized in that the image data is image data provided from a computer usable medium (91).

8. For use in a device (11) for printing an image on a recording sheet (56), a method of selecting a best size of recording sheet from a plurality of sizes of recording sheets, comprising the steps of:
A) determining whether a recording sheet larger than the image is available or not if the image is rotated 90 degrees;
B) selecting a recording sheet larger than the image not rotated 90 degrees if determination of the step A is negative;
C) selecting the smallest recording sheet if there are two or more recording sheets are selected in the step B;
D) determining whether a recording sheet larger than the image not rotated 90 degrees is available or not among those meeting the criteria of the step A;
E) selecting a recording sheet meeting the criteria of the step A if determination of the step D is negative, in order to print the image after rotating 90 degrees;
F) selecting the smallest recording sheet if there are two or more recording sheets are selected in the step E;
G) comparing a recording sheet meeting the criteria of the step D with that meeting the criteria of the step A and selecting the smaller one; and
H) selecting the smallest recording sheet if there are two or more recording sheets are selected in the step G.

9. The method of claim 8, characterized in that the image is an image received from a remote communication device, an image provided from a scanner or an image provided from a computer usable medium.
